**Europäisches Patentamt**

**European Patent Office**

**Office européen des brevets**

(11) Veröffentlichungsnummer : **0 411 296 B1**

(12) **EUROPÄISCHE PATENTSCHRIFT**

(45) Veröffentlichungstag der Patentschrift :
**02.09.92 Patentblatt 92/36**

(21) Anmeldenummer : **90111732.5**

(22) Anmeldetag : **21.06.90**

(51) Int. Cl.⁵ : **F01M 11/06, F01M 1/12**

(54) **Antriebseinrichtung eines Fahrzeuges.**

(30) Priorität : **01.08.89 DE 3925411**

(43) Veröffentlichungstag der Anmeldung :
**06.02.91 Patentblatt 91/06**

(45) Bekanntmachung des Hinweises auf die
Patenterteilung :
**02.09.92 Patentblatt 92/36**

(84) Benannte Vertragsstaaten :
**DE FR GB IT SE**

(56) Entgegenhaltungen :
**DE-A- 1 908 240
DE-A- 2 701 939**

(56) Entgegenhaltungen :
**FR-A- 502 791
FR-A- 856 123
US-A- 4 677 948
PATENT ABSTRACTS OF JAPAN vol. 8, no. 90
(M-292)(1527) 25 April 1984, & JP-A-59 5820**

(73) Patentinhaber : **MAN Nutzfahrzeuge
Aktiengesellschaft
Dachauer Strasse 667 Postfach 50 06 20
W-8000 München 50 (DE)**

(72) Erfinder : **Hagin, Faust, Dipl.-Ing.
Poccistrasse 2
W-8000 München 2 (DE)**
Erfinder : **Drewitz, Hans, Ing.-grad.
Agnesstrasse 59
W-8000 München 40 (DE)**

## Beschreibung

Die Erfindung betrifft eine Antriebseinrichtung eines Fahrzeuges mit Merkmalen entsprechend dem Oberbegriff des Anspruches 1.

Die Erfindung geht aus von einer aus der US 4, 677, 948 bekannten Antriebseinrichtung. An der Unterseite des Motorblockes ist dort eine Ölwanne angeordnet, aus der Öl über eine Saugleitung mittels einer Servopumpe absaugbar und einem Kreislauf zuführbar ist. Außerdem reichen in den Bereich der Ölwanne bis unterhalb des maximalen Öffüllniveaus Rotationskörper - unter anderem Ausgleichswellen - herunter, die durch ein sie gegen plantschendes Öl schützendes Organ - ein Gehäuse - zumindest partiell überdeckt sind. Außerdem sind Vorkehrungen zum Sammeln und Absaugen von doch in den Innenraum des Schutz-Gehäuses eingedrungenem Öl vorgesehen, die hier aber an die Konstruktion der Wellen und deren Funktion angelehnt sind. Für andere Fälle, also andere Rotationskörper ist diese Lösung nicht anwendbar. Unter solchen, von der Kurbelwelle des Motors verschiedenen Rotationskörpern sind solche wie Zahnräder, Kettenräder, Schwungräder oder dergleichen zu verstehen, der bzw. die in den Bereich der Öl wanne bis unter das maximale Öffüllniveau herunterreichen und ohne geeignete Schutzmaßnahmen von während des Fahrbetriebes innerhalb der Ölwanne hin und her plantschendem Öl beaufschlagt werden. Dieses unkontrolliert plantschende bzw. schwappende Öl stellt einen unkontrolliert auftretenden Widerstand für den Lauf des Rotationskörpers dar, so daß dessen Funktionsweise zum Teil sogar ganz erheblich beeinträchtigt sein kann. Letzteres wäre beispielsweise im Zusammenhang mit einem Schwungrad der Fall, das als Energiespeicher Teil einer Bremsenergie-Rückgewinnungseinrichtung ist. Ein solches Schwungrad sollte möglichst frei und ungehindert rotieren können und keinen energieverzehrenden Widerständen ausgesetzt sein. Bei einem solchen Schwungrad bestünde aber auch dann, wenn es in einem eigenen Gehäuse gelagert ist, die Gefahr, daß sich beispielsweise durch Lager oder aus anderen Quellen eindringendes Öl im Gehäuse sammelt und bei zu großer Menge den Lauf des Schwungrades behindern könnte.

Es ist daher Aufgabe der Erfindung, eine Antriebseinrichtung der eingangs genannten Art so auszubilden, daß der Lauf des Rotationskörpers auch innerhalb des Schutz-Organes nicht durch eingedrungenes Öl behindert wird.

Diese Aufgabe ist erfindungsgemäß die eine Antriebseinrichtung der gattungsgemäßen Art in Verbindung mit den kennzeichnenden Merkmalen des Anspruchs 1 gelöst.

Mit der erfindungsgemäßen Lösung wird sichergestellt, daß doch etwa in den Innenraum des Schutz-Organes eingedrungenes Öl an der untersten, damit geeignetsten Stelle gesammelt und aus dem betreffenden Sammelraum automatisch von Zeit zu Zeit durch die angegebenen Mittel abgesaugt wird. Auf diese Weise wird der aufgabengemäßen Zielsetzung mit einfachen Mitteln optimal Rechnung getragen.

Vorteilhafte Ausgestaltungen und Einzelheiten der erfindungsgemäßen Lösung sind in den Unteransprüchen gekennzeichnet.

Nachstehend ist die erfindungsgemäße Lösung anhand der Zeichnung näher erläutert, wobei in jeder der vier Figuren ein Ausführungsbeispiel der Erfindung weitestgehend schematisiert dargestellt ist.

In den Figuren ist von der Antriebseinrichtung eines Fahrzeuges, z.B. Personenkraftwagen, Lastkraftwagen, Omnibus, Traktor, Bulldozer, Hubstapler, Kettenfahrzeug oder dergleichen im wesentlichen nur jener Teil dargestellt, der durch die an der Unterseite des Motor/Getriebe-Blockes angeordnete Ölwanne 1 gebildet ist.

Aus der besagten Ölwanne 1 ist mittels einer Servopumpe 2 über eine Saugleitung 3 mit in Saugrichtung öffnendem Rückschlagventil 4 und nachfolgendem Filter 5 (nicht zwingend und auch nicht an dieser Stelle notwendig) Öl in einen Kreislauf pumpbar, der in der Zeichnung lediglich durch eine Förderleitung 6 angedeutet ist. Bei diesem Kreislauf kann es sich um einen Kühlölkreislauf, den Steuer- und/oder Arbeitskreislauf von Hydromaschinen als Teil eines hydrostatischmechanischen Leistungsverzweigungsgetriebes, eines Bremskreises oder der Servolenkung des Fahrzeuges handeln.

Aus Gründen einer höchst kompakten Bauweise reicht wenigstens ein Rotationskörper 7 als Teil der Antriebseinrichtung, wie Zahnrad, Kettenrad, Schwungrad oder dergleichen bis in den Bereich der Ölwanne 1 herunter, und zwar so weit, daß er mit seiner untersten Kante 8 unterhalb des mit 9 markierten maximalen Ölwannen-Füllniveaus liegt.

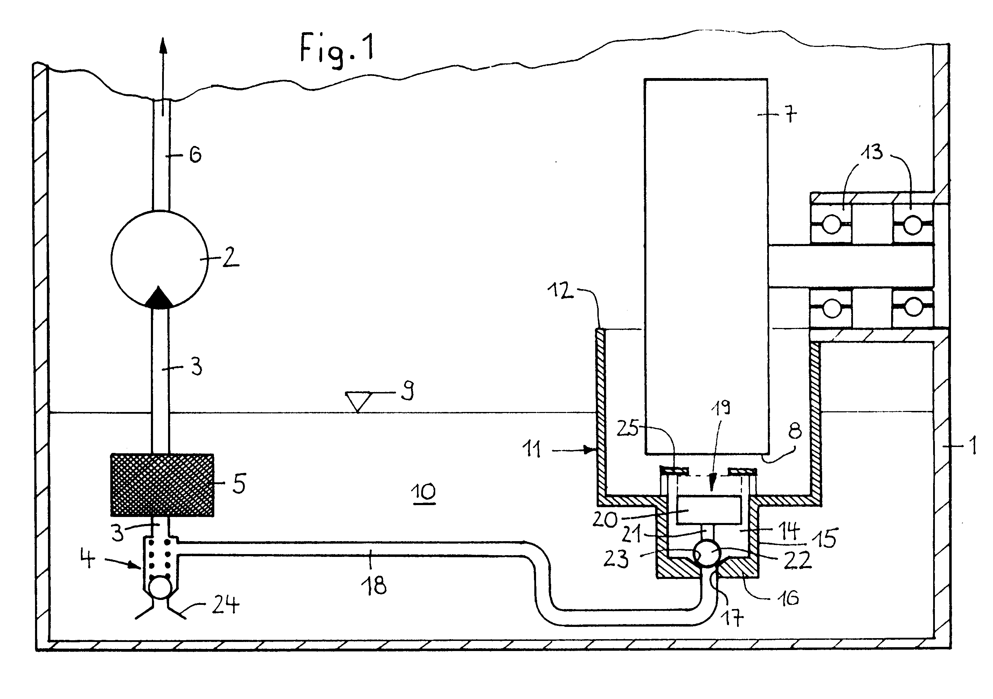

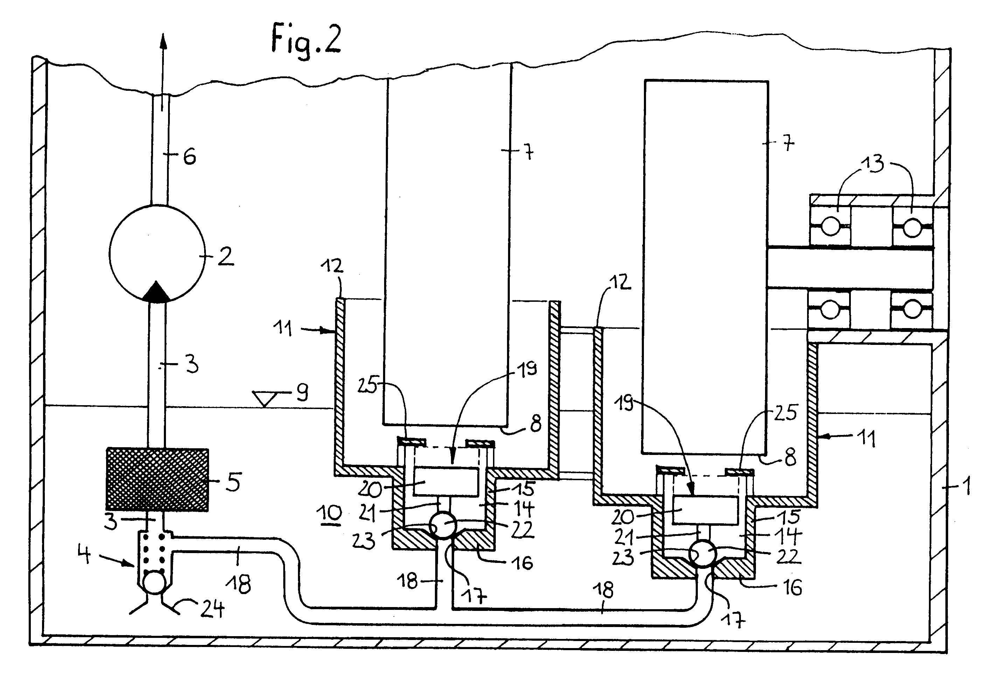

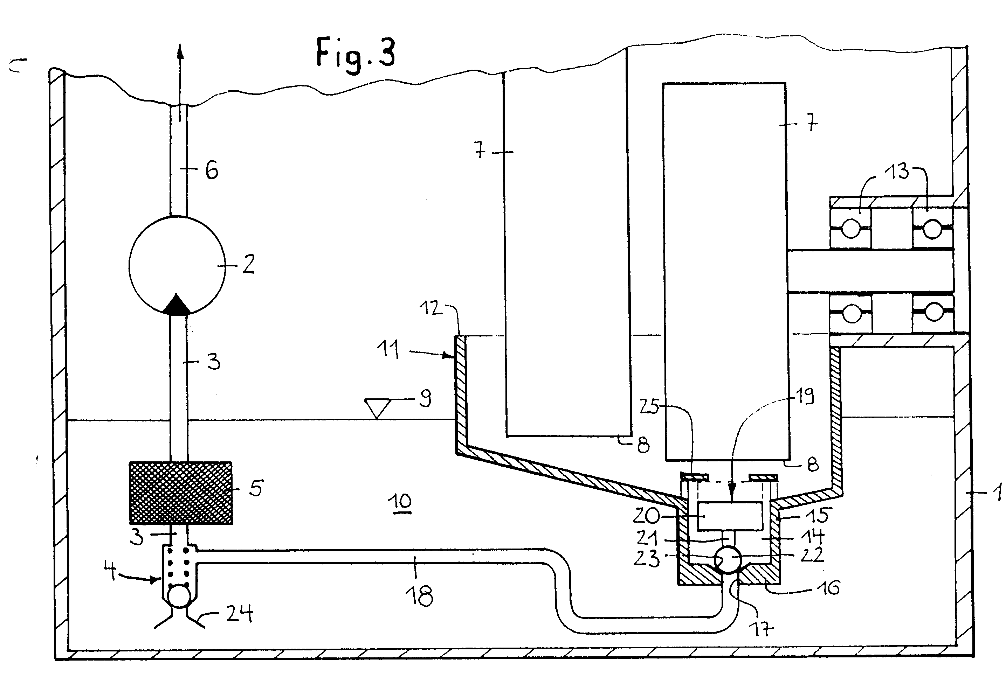

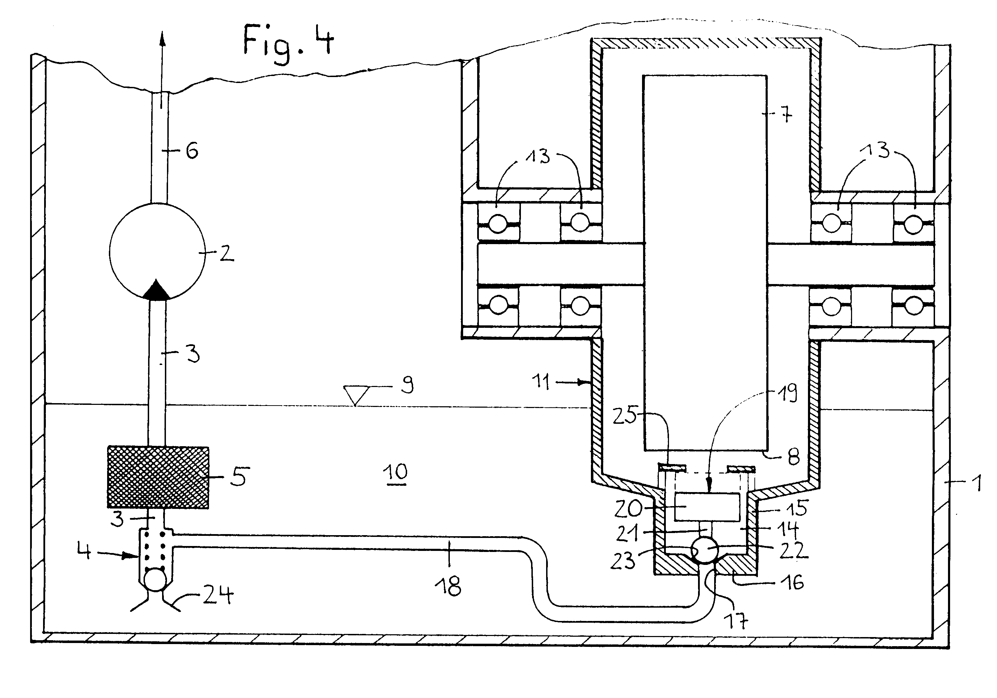

Unter normalen Umständen würde der Rotationskörper 7 während der Fahrt des Fahrzeuges infolge der ständig hin- und herschwappenden bzw. plantschenden Ölfüllung 10 mit Öl angeschleudert, was seinen ordnungsgemäßen Lauf behindern, zumindest jedoch zu einem Wirungsgradverlust führen könnte. Diesen Nachteilen wird dadurch abgeholfen, daß dem Rotationskörper 7 ein ihn gegenüber der Ölfüllung 10 der Ölwanne 1 abschottendes sowie durch zumindest partielle Überdeckung seines unteren Bereiches gegen während der Fahrt plantschendes bzw. hin- und herschwappendes Öl schützendes Organ 11 und außerdem Vorkehrungen zum Sammeln und Absaugen von doch in den Innenraum des Schutz-Organs 11 eingedrungenem Öl zugeordnet sind. Dieses Schutz-Organ 11 kann nach Art einer nach oben hin offenen, nur den unteren Bereich des Rotationskörpers 7 bzw. der Rotationskörper 7 überdeckenden Schutzschale ausgebildet sein. Diese Ausführungsform ist aus den Figuren 1 bis 3 ersichtlich. Das Schutz-Organ 11 kann aber auch durch ein den die Rotationskörper 7 vollständig umgebendes, jedoch nicht hermetisch dichtes Gehäuse gebildet sein, welcher Fall aus Figur 4 ersichtlich ist. Nicht hermetisch dicht bedeutet, daß im Laufe der Zeit Öl, wenn auch in geringen Mengen, z.B. aus den Lagern 13 des Rotationskörpers 7 oder aus der Ölwanne 1 über besagte Lager 13 oder über Verbindungsstellen zwischen Gehäuseteilen, beispielsweise durch Kapillarwirkung, in den Innenraum des gehäuseförmigen Schutz-Organs 11 vordringen kann. Das das Schutzorgan 11 bildende Gehäuse ist durch nicht näher beschriebene Mittel in fester Zuordnung in Bezug auf die Ölwanne 1 gehalten - siehe Fig. 4.

Falls das Schutz-Organ 11 durch eine Schutzschale gebildet ist, so ist diese innerhalb der Ölwanne 1 derart angeordnet bzw., wenn als eigenständiges Bauteil vorgefertigt, in der Ölwanne 1 befestigt, daß sie mit ihrer Oberkante 12 ein größeres Stück über dem maximalen Ölwannen-Füllniveau 9 liegt. Das Maß zwischen Oberkante 12 der Schutzschale 11 und maximalem Ölwannen-Füllniveau 9 ist von Fall zu Fall unterschiedlich, durch Versuche zu ermitteln und dann so festzulegen, daß zumindest ein weitestgehendes Überschwappen des in der Ölwanne 1 bevorrateten Öles 10 in den Innenraum der Schutzschale 11 auch unter extremen Fahrbedingungen vermeidbar ist.

In den Innenraum des Schutz-Organes 11 trotzdem eingedrungenes Öl läuft an dessen Wandinnenfläche abwärts und wird in einem erfindugsgemäß am untersten bzw. tiefen Bereich des Schutz-organes 11 ausgebildeten Sammelraum 14 gesammelt. Letzterer ist vorzugsweise durch eine topfförmige Ausbuchtung mit kreisringzylindrischer Seitenwand 15 und ebenem oder trichterförmigem Boden 16 gebildet.

An der tiefsten Stelle des Sammelraumes 14 ist ein bedarfsueise zu öffnender, normalerweise mittelbar verschlossener Auslaß 17 gegeben, an den eine Absaugleitung 18 angeschlossen ist. Als Mittel zum Schließen bzw. bedarfsweisen Öffnen des Sammelraum-Auslaßes 17 kann beispielsweise, wie in der Zeichnung dargestellt, ein Schwimmerventil 19 vorgesehen sein. Dessen Schwimmer 20 ist durch eine relativ dicke, runde Platte gebildet, die mit relativ großem Radialspiel im kreiszylindrischen Sammelraum 14 geführt ist. Das besagte Radialspiel muß mindestens so groß sein, daß das in den Innenraum des Schutz-Organes 11 eingedrungene Öl ungehindert in den Sammelraum 14 und dort in den Bereich unterhalb des Schwimmers 20 vordringen kann. An der Unterseite des Schwimmers 20 schließt sich als weiteres Teil des Schwimmerventiles 19 ein Schaft 21 mit Kugelkopf 22 an, der zum Verschließen des Auslasses 17 mit einem eingangs desselben gegebenen Ventilsitz 23 zusammenwirkt. Der Auslaß 17 des Sammelraumes 14 ist normalerweise durch das Schwimmerventil 19 dann geschlossen, wenn dieses durch sein Eigengewicht mit seinem Kugelkopf 22 auf dem Ventilsitz 23 aufsitzt und im Sammelraum 14 noch nicht genügend viel Öl gesammelt ist. Der Auslaß 17 wird jedoch dann geöffnet, wenn im Sammelraum 14 eine genügend große Ölmenge gesammelt ist und infolge der hierdurch bewirkten Auftriebskraft das Schwimmerventil 19 von seinem Ventilsitz 23 abgehoben wird. Sobald dies der Fall ist, kann eine Absaugung des gesammelten Öles mittels der Servopumpe 2 erfolgen und zwar über die Absaugleitung 18, die in den dargestellten Ausführungsbeispielen zur Saugleitung 3 hinführt und in diese im Bereich zwischen Rückschlagventil 4 und Filter 5 einmündet. Es ist dabei darauf zu achten, daß der Auslaß 17 des Sammelraumes 14 bzw. die Einmündungsstelle der Absaugleitung 18 in die Saugleitung 3 der Servopumpe 2 niveaumäßig höher als der Eintrittsbereich 24 der Saugleitung 3 liegt und das Gewicht des Schließorganes oder der hierauf einwirkenden Schließfeder des Rückschlagventiles 4 so ausgelegt ist, daß sich ein diese Öl-Absaugung aus dem Sammelraum 14 ermöglichender Druckabfall in dem von der Servopumpe 2 aus der Ölwanne 1 durch die Saugleitung 3 geförderten Öl ergibt.

Des weiteren ist ein das Öffnen und Schließen des Schwimmerventiles 19 erfassender Sensor vorgesehen, der in dem Fall, wenn die Servopumpe 2 im Moment des Öffnens des Schwimmerventiles 19 inaktiv sein sollte, eine Inbetriebnahme der Servopumpe 2 und gegebenenfalls Wiederabschaltung desselben nach Schließen des Schwimmerventiles 19 auslöst. Dieser Sensor kann an geeigneter Stelle des Sammelraumes 14 oder des Schutz-Organes 11 angeordnet sein. Vorzugweise bildet der Sensor gleichzeitig einen den Öffnungshubweg des Schwimmerventiles 19 begrenzenden Anschlag 25, der in das Schutz-Organ 11 oberhalb des Sammelraumes 14 zwischen diesem und der Unterkante 8 des Rotationskörpers 7 eingebaut ist. Der Anschlag/ Sensor 15 kann beispielsweise durch eine metallische Platte gebildet sein, die ein Teil eines kapazitiven Näherungsschälters bildet und über eine elektrische Signalleitung mit einer den Betrieb der Servopumpe 2 regelnden Steuereinrichtung verbunden ist.

## Patentansprüche

1. Antriebseinrichtung eines Fahrzeuges, mit einer Ölwanne (1) an der Unterseite des Motor/Getriebe-Blockes, aus der Öl über eine Saugleitung (3) mittels einer Servopumpe (2) absaugbar und einem Kreislauf zuführbar ist, und mit wenigstens einem von der Kurbelwelle verschiedenen Rotationskörper (7) wie Zahnrad, Kettenrad, Schwungrad oder dergleichen, der bis in den Bereich unterhalb des maximalen Ölfüllniveaus (9) der Ölwanne (1) herunterreicht und durch ein ihn gegen plantschendes Öl schützendes Organ (11) zumindest partiell überdeckt ist, und mit Vorkehrungen zum Sammeln und Absaugen von doch in den Innenraum des Schutz-Organs (11 ) eingedrungenem Öl, dadurch gekennzeichnet, daß am untersten Bereich des Schutz-Organes (11) ein Sammelraum (14) für in den Innenraum des Schutz-Organs (11) eingedrungenes Öl ausgebildet ist, der an seiner tiefsten Stelle einen Auslaß (17) aufweist, der normalerweise durch ein Schließorgan (19) verschlossen ist, das bei genügender Öl-Füllung im Sammelraum (14) in Öffnungsstellung überführt wird und dann das gesammelte Öl mittels der Servopumpe (2) über eine vom Auslaß (17) abgehende und in die Saugleitung (3) einmündende Absaugleitung (18) absaugbar ist.

2. Antriebseinrichtung nach Anspruch 1, dadurch gekennzeichnet, daß in die Saugleitung (3) strömungsmäßig vor der Einmündung der Absaugleitung (18) ein Rückschlagventil (4) eingebaut ist, und daß das Gewicht des Schließorganes oder die Druckkraft der hierauf einwirkenden Schließfeder des Rückschlagventiles (4) so ausgelegt ist, daß sich in der Saugleitung (3) immer ein Druckgefälle einstellt, das automatisch eine Absaugung von Öl aus dem Sammelraum (14) des Schutz-Organs (11) mittels der Servopumpe (2) zu läßt.

3. Antriebseinrichtung nach Anspruch 1, dadurch gekennzeichnet, daß ein das Öffnen und Schließen des Schließorgans (19) erfassender Sensor vorgesehen ist, der dann, wenn die Servopumpe (2) im Moment des Öffnens des Schließorganes (19) inaktiv sein sollte, eine Inbetriebnahme der Servopumpe (2) und gegebenenfalls Wiederabschaltung derselben nach Schließen des Schließorganes (19) auslöst.

4. Antriebseinrichtung nach einem der Ansprüche 1 und 3, dadurch gekennzeichnet, daß in das Schutz-Organ (11) oder den Sammelraum (14) ein den Öffnungs-Hubweg des Schließorganes (19) begrenzender Anschlag (25) eingebaut ist.

5. Antriebseinrichtung nach den Ansprüchen 3 und 4, dadurch gekennzeichnet, daß der Sensor gleichzeitig den den Öffnungshubweg des Schließorganes (19) begrenzenden Anschlag (25) bildet.

6. Antriebseinrichtung nach einem der Ansprüche 1 und 3 bis 5, dadurch gekennzeichnet, daß das Schließorgan (19) durch ein Schwimmerventil gebildet ist, das mit Eigengewicht auf einem eingangs des Auslasses (17) gegebenen Ventilsitz (23) aufsitzt, von letzterem aber bei genügender Öl-Füllung im Sammelraum (14) infolge der hierdurch bewirkten Auftriebskraft abhebt und sich in Öffnungsstellung bewegt.

7. Antriebseinrichtung nach Anspruch 6, dadurch gekennzeichnet, daß der Schwimmer (20) des Schwimmerventiles (19) durch eine relativ dicke runde Platte gebildet und mit großem Radialspiel im durch eine kreisringzylindrische Seitenwand (15) begrenzten Sammelraum (14) beweglich geführt ist.

8. Antriebseinrichtung nach Anspruch 7, dadurch gekennzeichnet, daß sich an der Unterseite des Schwimmers (20) als weiteres Teil des Schwimmerventiles (19) ein Schaft (21 ) mit Kugelkopf (22) anschließt, der mit dem Ventilsitz (23) zusammenwirkt.

9. Antriebseinrichtung nach Anspruch 1, dadurch gekennzeichnet, daß das Schutz-Organ (11) durch ein den Rotationskörper (7) vollständig umgebendes, aber nicht hermetisch abgedichtetes Gehäuse gebildet ist.

10. Antriebseinrichtung nach Anspruch 1, dadurch gekennzeichnet, daß das Schutz-Organ (11) durch eine nach oben hin offene, nur den unteren Bereich des Rotationskörpers (7) überdeckende Schutzschale gebildet und diese innerhalb der Ölwanne (1) derart angeordnet bzw. befestigt ist, daß sie mit ihrer Oberkante (12) ein größeres Stück über dem maximalen Ölwannen-Füllniveau (9) und mit ihrer Unterkante (13) unterhalb des letzteren liegt.

## Claims

1. A drive arrangement of a vehicle, having on the lower side of the engine gearbox unit an oil sump (1) from which oil can be drawn off via a suction pipe (3) by means of a servo pump (2) and fed to a circuit, and having at least one body of revolution (7) distinct from the crankshaft, such as a gear wheel, chain wheel, flywheel or the like, which extends down into the region below the maximum oil level (9) in the oil sump (1) and is at least partly covered by a member (11) protecting it from oil splashes, and having precautionary means for collecting and drawing off oil which has nevertheless penetrated the interior of the protective member (11), characterised in that a collecting chamber (14) for oil which has penetrated the interior of the protective member (11) is formed on the lowermost region of the protective member (11), the said collecting chamber having at its lowest point an outlet (17) which is normally closed by a closing member (19) which is moved into the open position when the collecting chamber (14) is sufficiently filled with oil, and the collected oil can then be drawn off by means of the servo pump (2) via an extraction pipe (18) issuing from the outlet (17) and discharging into the suction pipe (3).

2. A drive arrangement according to claim 1, characterised in that a non-return valve (4) is fitted in the suction pipe (3) upstream of the discharge opening of the extraction pipe (18), and in that the weight of the closing member or the pressure of the closing spring of the non-return valve (4) acting thereon is such that a pressure gradient is always produced in the suction pipe (3), automatically allowing oil to be drawn off from the collecting chamber (14) of the protective member (11) by means of the servo pump (2).

3. A drive arrangement according to claim 1, characterised in that a sensor Is provided which detects the opening and closing of the closing member (19), the said sensor, should the servo pump (2) be inactive at the moment when the closing member (19) is opened, then triggering operation of the servo pump (2) and, if necessary, switching the latter off again after closure of the closing member (19).

4. A drive arrangement according to either one of claims 1 and 3, characterised in that a stop (25) limiting the length of the opening stroke of the closing member (19) is fitted in the protective member (11) or the collecting chamber (14).

5. A drive arrangement according to claims 3 and 4, characterised in that the sensor simultaneously forms the stop (25) limiting the length of the opening stroke of the closing member (19).

6. A drive arrangement according to any one of claims 1 and 3 to 5, characterised in that the closing member (19) is formed by a float valve which is seated by its own weight on a valve seat (23) provided at the beginning of the outlet (17), but which is raised from the said valve seat when the collecting chamber (14) is sufficiently filled with oil, as a result of the buoyancy thereby created, and moved into the open position.

7. A drive arrangement according to claim 6, characterised in that the float (20) of the float valve (19) is formed by a relatively thick round plate and is carried so as to be movable with a large degree of radial clearance in the collecting chamber (14) which is bounded by a circular cylindrical side wall (15).

8. A drive arrangement according to claim 7, characterised in that a shaft (21) with a spherical head (22) is connected to the underside of the float (20) as a further part of the float valve (19), the said spherical head co-operating with the valve seat (23).

9. A drive arrangement according to claim 1, characterised in that the protective member (11) is formed by a housing which completely surrounds the body of revolution (7) but which is not hermetically sealed.

10. A drive arrangement according to claim 1, characterised in that the protective member (11) is formed by a protective dish which is open at the top and only covers the lower region of the body of revolution (7), and the said protective dish is arranged or mounted inside the oil sump (1) in such a way that its upper edge (12) is at a relatively great height above the maximum oil level (9) in the oil sump and its lower edge (13) lies below the said maximum oil level.

**Revendications**

1) Dispositif d'actionnement d'un véhicule, ayant un carter d'huile (1) sur la face inférieure du bloc moteur, à partir duquel de l'huile peut-être aspirée avec une servo-pompe (2) par l'intermédiaire d'une conduite d'aspiration (3) et envoyée dans un circuit est ayant au moins un corps de révolution (7) différent du vilebrequin, tel qu'un pignon, une roue à chaîne, un volant ou corps analogue, qui s'enfonce jusque dans la zone située en dessous du niveau de remplissage maximum d'huile (9) du carter (1) et qui est recouvert au moins partiellement par un organe (11) le protégeant des projections d'huile et ayant des dispositifs pour recueillir et évacuer par aspiration de l'huile ayant toutefois pénétré dans l'espace intérieur de protection (11), dispositif caractérisé

– en ce que dans la zone inférieure de l'organe de protection (11) est aménagé un espace collecteur (14) pour l'huile qui a pénétré dans l'espace intérieur de l'organe de protection (11), espace (14) qui comprend à son point le plus bas une ouverture de sortie (17), qui est normalement fermée par un organe (19) d'obturation, lequel passe en position ouverte lors d'un remplissage d'huile suffisant de l'espace collecteur (14) et

– en ce que l'huile collectée peut alors être retiré et aspirée au moyen de la servo-pompe (2) via une canalisation (18) d'aspiration débouchant dans la canalisation d'aspiration (3)et partant de l'ouverture de sortie (17).

2) Dispositif d'actionnement selon la revendication 1, caractérisé:

– en ce qu'une vanne anti-retour (4) est montée dans la canalisation d'aspiration (3) dans le sens du courant avant l'arrivée de la canalisation d'évacuation (8) et

– en ce que le poids de l'organe de fermeture ou la force de pression du ressort de fermeture de la soupape anti-retour (4) agissant sur lui sont conçus de façon à créer dans la conduite d'aspiration (3) constamment une chute de pression, qui permette automatiquement une évacuation par aspiration de l'huile de l'espace collecteur (14) de l'organe de protection (11) au moyen de la servopompe (2).

3) Dispositif d'actionnement selon la revendication 1, caractérisé

– en ce qu'un capteur détectant l'ouverture et la fermeture de l'organe de fermeture (19) est prévu, capteur qui ensuite, si la servopompe (2) se trouve inactive au moment de l'ouverture de l'organe de fermeture (19), déclenche une mise en marche de la servopompe (2) et éventuellement de nouveau sa mise hors circuit après fermeture de l'organe de fermeture (19).

4) Dispositif d'actionnement selon une des revendications 1 à 3, caractérisé

– en ce qu'une butée (25) est installée dans l'organe de protection (11) ou dans l'espace collecteur (14), butée qui limite la course d'ouverture de l'organe de fermeture (19).

5) Dispositif d'actionnement selon les revendications 3 et 4, caractérisé

– en ce que le capteur constitue en même temps la butée (25) limitant la course d'ouverture de l'organe de fermeture (19).

6) Dispositif d'actionnement selon une des revendications 1 et 3 à 5, caractérisé

– en ce que l'organe de fermeture (19) est une vanne à flotteur, qui repose par son poids propre sur un siège de soupape (23) situé à l'entrée de l'orifice de sortie (17), qui se soulève du siège pour un remplissage suffisant d'huile dans l'espace collecteur (14) sous l'effet de la force d'Archimède et qui se met en position d'ouverture.

7) Dispositif d'actionnement selon la revendication 6, caractérisé en ce que le flotteur (20) de la soupape à flotteur (19) est formé par une plaque ronde relativement mince et est guidé de façon à être mobile avec un jeu radial important dans l'espace collecteur (14) délimité par une paroi latérale cylindrique circulaire.

8) Dispositif d'actionnement selon la revendication 7, caractérisé

– en ce que sur la face inférieure du flotteur (20) est fixée comme une autre pièce de la soupape à flotteur (19) une tige (21) avec une tête sphérique (22), qui coopère avec le siège de soupape (23).

9) Dispositif d'actionnement selon la revendication 1, caractérisé

– en ce que l'organe de protection (11) est formé par un boîtier entourant complètement le corps de révolution (7) mis non isolé de façon hermétique.

10) Dispositif d'actionnement selon la revendication 1, caractérisé

– en ce que l'organe de protection (11) est formé d'une enveloppe de protection ouverte vers le haut, entourant seulement la zone inférieure du corps de révolution (7) et cette enveloppe est disposée ou fixée de façon qu'avec son bord supérieur (12) soit un plus grand morceau situé au-dessus du niveau de remplissage (9) maximum du carter d'huile et qu'avec son bord inférieur (13) un plus grand morceau soit situé en-dessous de ce carter niveau.

Fig.1

Fig.2

EP 0 411 296 B1

Fig.3

EP 0 411 296 B1

Fig. 4

EP 0 411 296 B1